# EUROPEAN PATENT APPLICATION

(11) **EP 3 731 537 A1**
(43) Date of publication of application: **28.10.2020**
(21) Application number: 20161135.7
(22) Date of filing: 05.03.2020
(51) Int. Cl.: H04R 1/40, H04R 1/02, H04R 27/00, H04R 5/02, H04R 7/04

(54) **SYSTEMS AND METHODS IN TILED DISPLAY IMAGING SYSTEMS**

(30) Priority: 29.03.2019 US 201916369165
(71) Applicant: Christie Digital Systems USA, Inc., Cypress, CA 90630 (US)
(72) Inventor: PASTRIK, Darren, Kitchener, ON N2G 1Z4 (CA); HEMPHILL, Bryan, CANADA, ON N2V 2N6 (CA); LEMIEUX, Marc, Guelph, ON N1G 5B5 (CA); LAMM, Mark, Mississagua, ON L5N 7L5 (CA)
(74) Representative: Zimmermann, Tankred Klaus

(57) **Abstract**

An example tiled display imaging system includes a frame and a plurality of tiles supported on the frame in a geometrical configuration for displaying a composite image. Each tile includes a display configured to display a respective portion of the composite image according to image data. Each tile further includes an acoustic coupling device coupled to the display, the acoustic coupling device configured to induce resonance in the display to generate an audio response at the tile according to audio data.

## Description

### FIELD

The specification relates generally to imaging systems, and specifically to a tiled display imaging system.

### BACKGROUND

Tiled display imaging systems include multiple cabinets or tiles arranged to form a display wall. By using an array of tiles, large display walls can be achieved. The tiled display imaging systems can also include audio systems. As display walls become larger, it becomes challenging to employ traditional audio systems to achieve audio channel separation appropriate to the display wall.

### SUMMARY

An aspect of the specification is directed to a tiled display imaging system including a frame; and a plurality of tiles supported on the frame in a geometrical configuration for displaying a composite image, each tile including: a display configured to display a respective portion of the composite image according to image data; and an acoustic coupling device coupled to the display, the acoustic coupling device configured to induce resonance in the display to generate an audio response at the tile according to audio data.

According to an implementation, the audio data comprises an audio map defining a plurality of audio tracks to be generated at a respective one of the plurality of tiles by the acoustic coupling device.

According to an implementation, at a first tile of the plurality of tiles, a first acoustic coupling device is configured to vibrate a first display at a first vibration frequency to generate a first audio response of a first output frequency according to a first audio track of the plurality of audio tracks; and at a second tile of the plurality of tiles, a second acoustic coupling device is configured to vibrate a second display at a second vibration frequency to generate a second audio response of a second output frequency according to a second audio track of the plurality of audio tracks.

According to an implementation, the audio data is integrated with the image data such that the audio tracks correspond to the respective portions of the composite image displayed at the respective one of the plurality of tiles.

According to an implementation, each tile further comprises an amplifier coupled to the acoustic coupling device to amplify the audio response generated at the tile.

According to an implementation, each tile further comprises an equalizer coupled to the acoustic coupling device to equalize the audio response generated at the tile.

According to an implementation, the acoustic coupling devices are configured to generate audio responses at frequencies between 80 Hz to 20,000 Hz.

According to an implementation, the system further comprises a bass unit configured to generate audio responses at frequencies between 20 Hz to 200 Hz.

According to an implementation, the displays comprise light emitting diode (LED) displays.

An aspect of the specification is directed to a method in a tiled display imaging system including a plurality of tiles arranged in a geometrical configuration, the method comprising: obtaining image data defining a composite image to be displayed in the tiled display imaging system; obtaining audio data defining sound to be generated in the tiled display imaging system; and at each of the tiles: displaying, by a display of the tile, a respective portion of the composite image according to the image data; and generating, by an acoustic coupling device of the tile, the acoustic coupling device coupled to the display, an audio response via resonance induced in the display according to the audio data.

According to an implementation, the audio data comprises an audio map defining a plurality of audio track to be generated at a respective one of the plurality of tiles by the acoustic coupling device.

According to an implementation, the method further comprises: at a first tile of the plurality of tiles, vibrating a first display at a first vibration frequency to generate a first audio response of a first output frequency according to a first audio track of the plurality of audio tracks; and at a second tile of the plurality of tiles, vibrating a second display at a second vibration frequency to generate a second audio response of a second output frequency according to a second audio track of the plurality of audio tracks.

According to an implementation, the audio data is integrated with the image data such that the audio tracks correspond to the respective portions of the composite image displayed at the respective one of the plurality of tiles.

According to an implementation, the method further comprises at each of the tiles, amplifying, by an amplifier, the audio response generated at the tile.

According to an implementation, the method further comprises at each of the tiles, equalizing, by an equalizer, the audio response generated at the tile.

According to an implementation, generating the audio response comprises generating the audio response at frequencies between 80 Hz to 20,000 Hz.

According to an implementation, the method further comprises generating, by a bass unit, audio responses at frequencies between 20 Hz to 200 Hz.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, ZZ, and the like). Similar logic can be applied for two or more items in any occurrence of "at least one ..." and "one or more..." language.

The terms "about", "substantially", "essentially", "approximately", and the like, are defined as being "close to", for example as understood by persons of skill in the art. In some implementations, the terms are understood to be "within 10%," in other implementations, "within 5%", in yet further implementations, "within 1%", and in yet further implementations "within 0.5%".

### BRIEF DESCRIPTIONS OF THE DRAWINGS

For a better understanding of the various implementations described herein and to show more clearly how they may be carried into effect, reference will now be made, by way of example only, to the accompanying drawings in which:
FIG. 1 is a schematic diagram of an example tiled display imaging system;
FIG. 2 is a schematic diagram of audio data and image data received in the tiled display imaging system of FIG. 1;
FIGS. 3A and 3B are schematic diagram of images and integrated audio responses generated in the tiled display imaging system of FIG. 1;
FIG. 4 is a schematic diagram of a tile in the tiled display imaging system of FIG. 1;
FIG. 5 is a flowchart of a method for operating the tiled display imaging system of FIG. 1; and
FIG. 6 is a schematic diagram of another example tiled display imaging system.

### DETAILED DESCRIPTION

Tiled display imaging systems include multiple cabinets or tiles arranged to form a display wall. The tiles include displays, such as LED displays to generate images. In particular, the displays may generate respective portions of a composite image formed over the entire display wall. LED display walls are generally constructed in a way that does not allow sound to travel through the display wall. Accordingly, audio systems are external to the display wall. As display walls become larger, traditional audio systems may not achieve audio channel separation appropriate to the display wall.

Tiled display imaging systems can therefore include at least two acoustic coupling devices, each acoustic coupling device coupled to a respective one of the displays. The acoustic coupling device is configured to induce resonance in the respective display to generate sound at the display. Accordingly, each tile in the display wall may emit an independent audio channel via the acoustic coupling device, thereby allowing for true sound directionality, as well as multi-channel sound independent of audience position. The acoustic coupling devices may be coupled to displays, such as LED displays which do not allow sound therethrough, without requiring perforations, flexible displays or other modifications to the display. In particular, by associating an acoustic coupling device to each display, a scalable and modular tiled solution is provided.

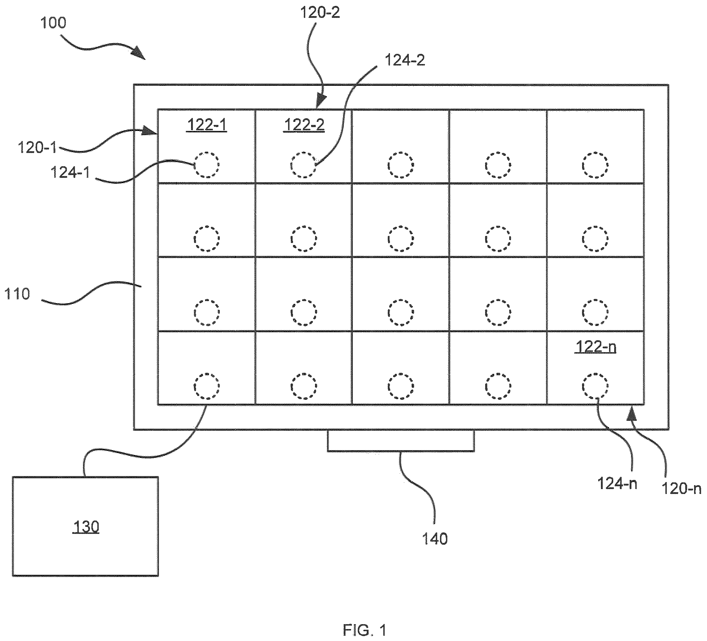

FIG. 1 depicts a schematic view of an example tiled display imaging system 100. The system 100 includes a frame 110 and tiles 120-1, 120-2, through to 120-n (referred to generically as a tile 120 and collectively as tiles 120 - this nomenclature is used elsewhere herein). The system 100 may further include a control unit 130 coupled to one or more of the tiles 120.

The frame 110 is generally shaped and sized to support the tiles 120 and can include metals, plastics, combinations of metals and plastics, or other suitable materials for supporting the tiles 120. In particular, the frame may be configured to support the tiles in a geometrical configuration, such as a rectangular tiled arrangement. In other examples, other geometrical configurations, such as curved surfaces, irregular shapes, or the like, are contemplated. In some examples, the frame 110 may include appropriate connectors, circuitry and the like to allow the tiles 120 to communicate with one another and with the control unit 130. The tiles 120 are supported on the frame 110 in the geometrical configuration to form a display wall.

The tiles 120 each include respective displays 122-1, 122-2, through to 122-n. The displays 122 are configured to generate images. In particular, the displays 122 are configured to generate a respective portion of a composite image formed over the display wall within the system 100. For example, the displays 122 may be light emitting diode (LED) displays, liquid crystal displays (LCD), or the like. More generally, the displays 122 include appropriate hardware (e.g. light sources, circuitry, including, for example, a processor for providing image capture, resizing, color matching, edge blending, etc.) to allow the display 122 to display the respective portion of the composite image within the system 100.

The tiles 120 further includes acoustic coupling devices 124-1, 124-2, through to 124-n. Specifically, each acoustic coupling device 124 is coupled to a respective display 122 to induce resonance in the respective display 122 to generate an audio response (i.e. a sound) at the tile 120. In particular, the acoustic coupling device 124 may be an acoustic transducer configured to receive an electrical signal defining an audio response to be produced, and in response, cause the display 122 to vibrate. The acoustic coupling device 124 may vibrate the display 122 at a vibration frequency to induce resonance in the display 122, and thereby generate the audio response. In particular, the vibration frequency at which the acoustic coupling device 124 vibrates may correspond to an output frequency of the audio response to be produced at the tile 120.

In the present example, each tile 120 includes an acoustic coupling device 124 coupled to the respective display 122. That is, the acoustic coupling device 124-1 is coupled to the display 122-1 to induce resonance in the display 122-1 to generate an audio response at the tile 120-1. The acoustic coupling device 124-2 is coupled to the display 122-2 to induce resonance in the display 122-2 to generate an audio response at the tile 120-2. In some implementations, the audio response generated at the tile 120-1 may be different from the audio response generated at the tile 120-2. For example, the respective audio responses may correspond to different frequencies, amplitudes, or the like. The tiles 120 and/or the frame 110 may therefore include a vibration dampening portion to isolate the vibrations generated at a given tile 120 from vibrations generated at adjacent tiles 120. The vibration dampening portion may be a resilient material or the like between the display 122 to the frame 110. For example, the display 122 may be supported on the frame 110 by a resilient material to reduce transmission of the vibrations induced by the acoustic coupling device 124 from the display 122 to the frame 110.

In other examples, some tiles 120 may include a display 122 and an acoustic coupling device 124 coupled to the display, while other tiles 120 may include only a display 122, without an associated acoustic coupling device 124. For example, the arrangement of tiles 120 having acoustic coupling devices 124 may be selected based on the size of the display wall and the desired audio output of the system 100. For example, the tiles 120 having acoustic coupling devices 124 may be arranged in a checkerboard pattern, along edges of the display wall, or other patterns suitable to produce the desired audio output of the system 100.

The system 100 may further include a control unit 130 coupled to the tiles 120. The control unit 130 is generally configured to control the tiles 120 to display images and generate audio responses according to the functionality as described herein. The control unit 130 may be directly coupled to each tile 120 and may control each tile 120 individually. In other examples, the tiles 120 may be connected to one another in a self-organizing manner. Accordingly, the control unit 130 may be connected directly to only a single tile 120, which may relay control instructions to other interconnected tiles 120. The control unit 130 can include a processor interconnected with a non-transitory computer-readable storage medium, such as a memory, and a communications interface. The processor may include a central processing unit (CPU), a microcontroller, a microprocessor, a processing core, a field-programmable gate array (FPGA), or similar. The processor may cooperate with the memory to execute instructions to realize the functionality discussed herein. The memory may include a combination of volatile (e.g. Random Access Memory or RAM) and non-volatile memory (e.g. read only memory or ROM, Electrically Erasable Programmable Read Only Memory or EEPROM, flash memory). All or some of the memory may be integrated with the processor. The communications interface includes suitable hardware (e.g. transmitters, receivers, network interface controllers and the like) to allow the control unit 130 to communicate with other computing devices, such as the tiles 120. The control unit 130 may be a general-purpose computing device configured to perform the functions described herein, or the control unit 130 may be a special purpose controller specifically configured to control the system 100 as described herein. In still further implementations, the control unit 130 need not be a stand-alone module and may be a network of the tiles 120 cooperating in a distributed manner to implement the functionality described herein.

In operation, the control unit 130 obtains image data and audio data defining images to be displayed and audio responses to be generated, respectively. For example, the image data and the audio data may be pre-stored at the control unit 130 in the memory or may be received at the control unit 130 via the communications interface from an external source. The control unit 130 may control the tiles 120, and in particular, the displays 122 to display images according to the image data. The image data may include an image map defining a respective portion of a composite image to be generated at a respective display. That is, the image map may define a first portion of the composite image to be generated at the display 122-1, a second portion of the composite image to be generated at the display 122-2, and so on. Together, the portions generated at each display 122 in the geometrical configuration form the composite image on the display wall. The control unit 130 may further control the tiles 120, and in particular, the acoustic coupling devices 124 to induce resonance in the display 122 to generate an audio response according to the audio data. That is, the acoustic coupling device 124 may vibrate the display 122 to which it is coupled, causing an audio response to be generated at the display 122. For example, the audio data may include an audio map defining a respective audio track to be generated at a respective display. That is, the audio map may define a first audio track to be generated by the acoustic coupling device 124-1 at the display 122-1, a second audio track to be generated by the acoustic coupling device 124-2 at the display 122-2, and so on. Accordingly, the acoustic coupling device 124-1 may vibrate the display 122-1 at a first vibration frequency to generate an audio response of a first output frequency according to the first audio track and the acoustic coupling device 124-2 may vibrate the display 122-2 at a second vibration frequency to generate an audio response of a second output frequency according to the second audio track. Each tile 120 may thus generate an audio response independent of each other, and the system 100 can thereby provide appropriate audio channel separation at the tiles 120 in the display wall.

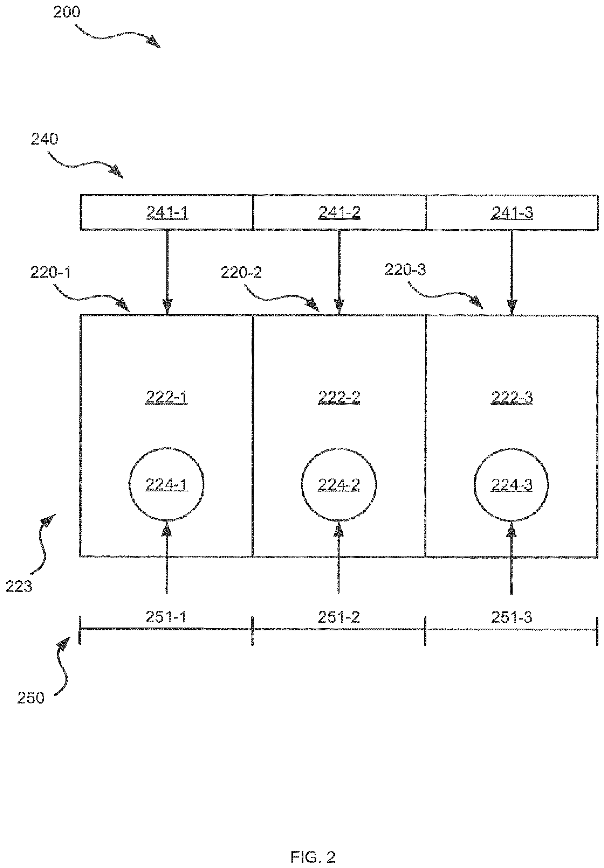

For example, referring to FIG. 2, an example tiled display imaging system 200 is depicted. The system 200 includes a first tile 220-1 including a first display 222-1 and a first acoustic coupling device 224-1, a second tile 220-2 including a second display 222-2 and a second acoustic coupling device 224-2, and a third tile 220-3 including a third display 222-3 and a third acoustic coupling device 224-3. Together, the displays 222 form a display wall 223. The system 200 may further include a control unit (not shown) configured to control the tiles 220 to display images and generate audio responses. Specifically, the system 200 is configured to display images according to image data and to generate audio responses according to audio data. For example, the image data and the audio data may be stored in a memory of the control unit or received from another source (e.g. another computing device) via a communications interface of the control unit.

The image data includes an image map 240 defining a first portion 241-1, a second portion 241-2 and a third portion 241-3 of a composite image to be displayed on the display wall 223. Specifically, the image map 240 defines the portion 241 of the target image to be displayed on a respective display 222. That is, the image map 240 associates the first portion 241-1 with the display 222-1 (e.g. to display a left side of the composite image), the second portion 241-2 with the display 222-2 (e.g. to display a middle of the composite image), and the third portion 241-3 with the display 222-3 (e.g. to display a right side of the composite image). The image data, and in particular, the portions 241 of the image map 240 can include a still frames, sequences or series of still frames, video data, or the like. In some implementations, the image data can include a pre-defined image map 240 defining the portions 241 to be displayed at the respective displays 222. That is, the image map 240 may be selected based on a pre-defined geometrical configuration of the tiles 220. In other implementations, the image data may be processed in accordance with a detected geometrical configuration of the tiles 220. That is, the tiles 220 may be configured to detect the shape and size of the geometrical configuration in a self-organized manner. The image data may be processed to define the image map 240 and distribute the portions 241 according to the detected geometrical configuration. For example, the processing may occur at the control unit, or in a distributed manner between the tiles 220.

Similarly, the audio data includes an audio map defining a first audio track 251-1, a second audio track 251-2, and a third audio track 251-3. Specifically, the audio map 250 defines the specific audio tracks 251 to be generated at a respective display 222 by the respective acoustic coupling device 224. That is, the audio map 250 associates the first audio track 251-1 with the acoustic coupling device 224-1, the second audio track 251-2 with the acoustic coupling device 224-2, and the third audio track 251-3 with the acoustic coupling device 114-3. In some implementations, the audio map 250 may be pre-defined to define audio tracks 251 to be generated by the respective acoustic coupling devices 224. That is, the audio map 250 may be selected based on a pre-defined geometrical configuration of the tiles 220. In other implementations, the audio data may be processed in accordance with a detected geometrical configuration of the tiles 220. That is, the tiles 220 may be configured to detect the shape and size of the geometrical configuration in a self-organized manner. The audio data may be processed to define the audio map 250 and distribute the audio tracks 251 according to the detected geometrical configuration. For example, the processing may occur at the control unit, or in a distributed manner between the tiles 220.

The audio tracks 251 may be selected to allow for multi-channel sound independent of audience position, as well as sound directionality. Specifically, the audio tracks 251 may be separated, for example to allow for multi-channel audio, such as to provide stereophonic sound or surround sound effects. That is, the first audio track 251-1 may be directed to a left-side audio track, the second audio track 251-2 may be directed to a middle audio track, and the third audio track 251-3 may be directed to a right-side audio track.

In other examples, the audio tracks for a tile 120, or a group of tiles 120 may be selected to correspond to the portion of the composite image displayed at the respective tile 120 or group of tiles 120. Specifically, the audio data may be integrated with the image data. In particular, the audio map 250 may be integrated with the image map 240 such that the audio track 251 generated by the acoustic coupling device 224 at a given display 222 may correspond with the respective portion 241 of the image displayed at the given tile.

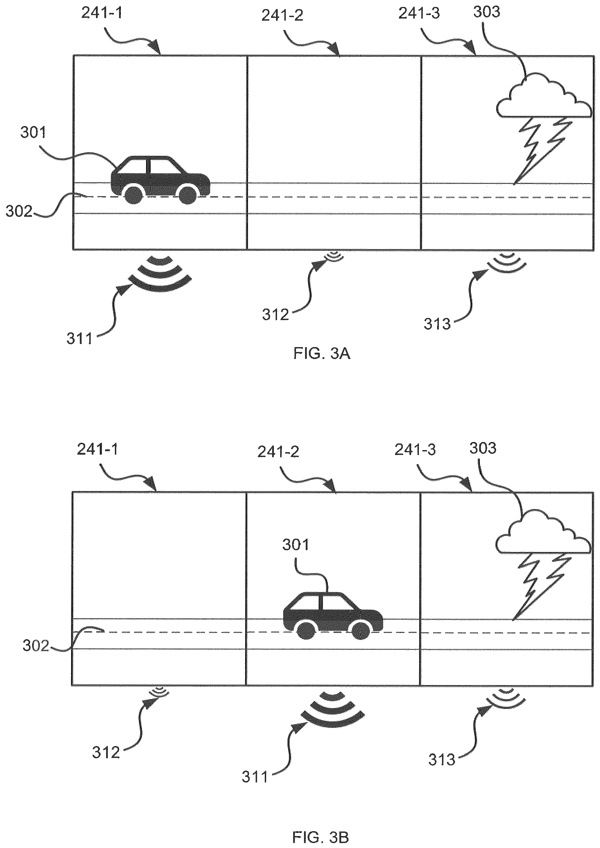

For example, referring to FIGS. 3A and 3B, schematic diagrams of the tiles 220 are depicted. In particular, the audio map 250 is integrated with the image map 240 such that the audio tracks 251 correspond to the portions 241 of the composite image displayed at the respective tile 220. That is, in FIG. 3A, the first portion 241-1 defines a car 301 driving along a road 302 towards a storm cloud 303 depicted at the third portion 241-3. Therefore, the display 222-1 displays the car 301 driving along the road 302 according to the first portion 241-1, the display 222-2 displays the road 302 according to the second portion 241-2, and the display 222-3 displays the road 302 and the storm cloud 303 according to the third portion 241-3. The audio map 250 therefore defines the audio tracks 251 to correspond with the portions 241 of the composite image displayed at the given display. Specifically, the audio tracks 251 define sounds generated by the objects depicted in the respective image portions 241. For example, the first audio track 251-1 may include car sounds 311 associated with the car for generation by the acoustic coupling device 224-1 at the display 222-1. The second audio track 251-2 may include background sounds 312 (e.g. music, white noise, or the like) for generation by the acoustic coupling device 224-2 at the display 222-2. The third audio track 251-3 may include weather sounds 313 associated with the storm cloud (e.g. thunder) for generation by the acoustic coupling device 224-3 at the display 222-3.

As the car 301 moves along the road 302 towards the storm cloud 303, the car 301 may move out of frame of the first portion 241-1 and into the frame of the second portion 241-2, as depicted in FIG. 3B. Therefore, the display 222-1 displays the road 302 according to the first portion 241-1, the display 222-2 displays the car 301 driving along the road 302 according to the second portion 241-2, and the display 222-3 displays the road 302 and the storm cloud 303 according to the third portion 241-3. The audio tracks 251 may therefore also change to match the sound generated by the objects depicted in the respective image portions 241. For example, the first audio track 251-1 may include the background sounds 312 for generation by the acoustic coupling device 224-1 at the display 222-1. The second audio track 251-2 may include the car sounds 311 associated with the car for generation by the acoustic coupling device 224-2 at the display 222-2. The third audio track 251-3 may include the weather sounds 313 associated with the storm cloud for generation by the acoustic coupling device 224-3 at the display 222-3.

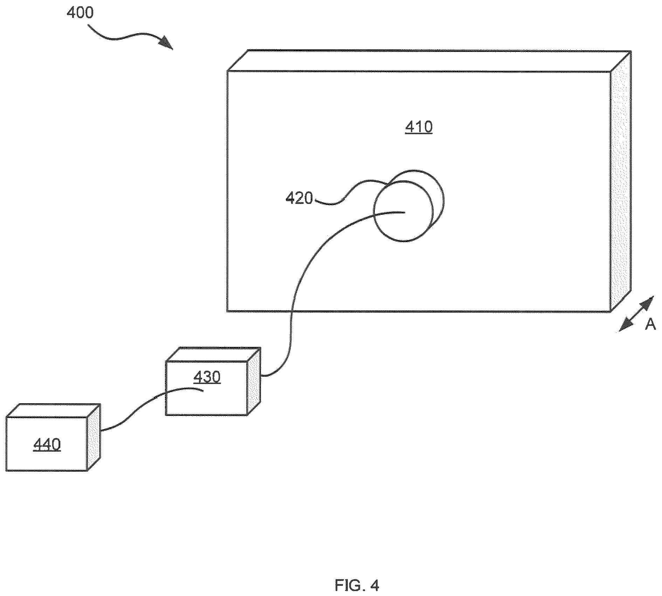

FIG. 4 is a schematic of an example tile 400. The tile 400 is similar to the tiles 120 and 220 and includes a display 410 and an acoustic coupling device 420 coupled to the display to induce resonance in the display to generate an audio response at the tile 400. The display 410 may be, for example, an LED display, and is configured to display images according to image data. In particular, the display 410 is configured to display a portion of a composite image within a tiled display imaging system. The acoustic coupling device 420 is coupled to the display 410 to induce resonance in the display 410 to generate an audio response. In particular, the acoustic coupling device 420 may be an acoustic transducer configured to receive an electrical signal (e.g. an audio track) defining an audio response to be produced, and in response, cause the display 410 to vibrate. In particular, the acoustic coupling device 420 may cause the display 410 to vibrate along an axis A at a vibration frequency to induce resonance in the display 410 and thereby generate the audio response at an appropriate output frequency (i.e. according to the audio track). In other examples, the display 410 may vibrate along different axes or in other suitable manners.

The tile 400 further includes an amplifier 430 coupled to the acoustic coupling device 420. The amplifier 430 is configured to amplify the audio response generated at the display 410. Specifically, the amplifier 430 is configured to amplify the raw audio output generated by the vibration of the display 410 to produce the desired audio output of the tiled display imaging system. For example, the amplifier 430 may amplify the audio response generated at the tile 400 based on the audio track received at the acoustic coupling device 420.

The tile 400 further includes an equalizer 440 coupled to the acoustic coupling device 420. The equalizer 440 is configured to equalize the audio response generated at the tile 400. Specifically, the output audio frequency response of the display 410 is based on its material property and physical size. Accordingly, the raw audio output generated at the display 410 may be equalized by the equalizer 440 to produce the intended frequency response of the audio source (i.e. the output frequency specified by the audio track received at the acoustic coupling device 420).

In operation, the acoustic transducer 420, the amplifier 430 and the equalizer 440 may thus cooperate to generate sound according to the audio track received at the acoustic coupling device. Specifically, the acoustic transducer 420 may vibrate the display 410 at a vibration frequency in accordance with the audio track. The vibration of the display 410 induces resonance in the display 122, thereby generating a sound at an output frequency. The equalizer 440 may adjust the output frequency to produce the intended frequency response as indicated by the audio track, and the amplifier 430 may increase the amplitude of the sound in accordance with the audio track. In some examples, the tile 400 may be configured to produce audio responses having frequencies in the range of about 80 Hz to 20,000 Hz. In particular, the mechanical nature of the production of the audio response (i.e. via vibration-induced resonance in the display 410) allows the audio responses within this range to be produced with good frequency form factor, as well as providing a highly directional audio response. Accordingly, the system may further include a bass unit configured to produce audio responses within the range of about 20 Hz to 200 Hz. For example, returning to Figure 1, the system 100 may further include the bass unit 140. The bass unit 140 may be coupled to the control unit 130 and is configured to generate audio responses within the range of about 20 Hz to 20,000 Hz to provide a full spectrum of audio responses.

The tiles therefore provide a self-contained, modular system capable of receiving image data and displaying corresponding images at the display, as well as receiving audio data and generating an audio response (i.e. a sound) at the display, via the acoustic transducer, the amplifier, and the equalizer. The modular nature of the tiles allows for scalability. In particular, a plurality of tiles may be arranged in a geometrical configuration (e.g. a rectangular array, a curved shape, an irregular shape, or the like) to form a display wall. Each tile may receive image data and audio data for displaying images and generating audio responses accordingly. Specifically, the tiles in the display wall may receive data and generate a response independently of each other, thus providing scalability to large-scale applications. For example, the tiles may be applicable in a theatre system to provide a screen of about 75 feet for displaying films, and having integrated audio capabilities. In other examples, the tiles may be utilized in digital signage, for example, for advertisements. Further, the modular nature of the tiles allows for image data and audio data to be cohesively integrated, and to localize the production of sound to the corresponding image portions on the display wall. The tiles may further be configured to communicate between one another to self-organize and to operate as a distributed computer network to process image data and audio data and allocate portions and tracks to each tile.

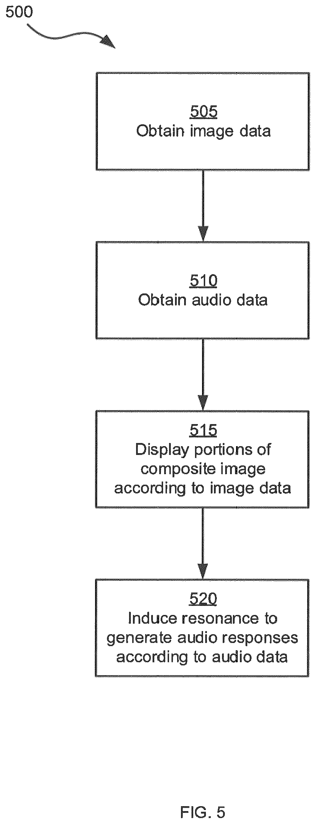

Referring now to FIG. 5, a flowchart of an example method 500 for operating a tiled display imaging system is depicted. The method 500 will be described in conjunction with its performance in the system 100. In other implementations, the method 500 may be performed in other suitable systems.

At block 505, the control unit 130 obtains image data defining a composite image to be displayed in the tiled display imaging system 100. For example, the control unit 130 may obtain the image data from memory or from an external source. In some examples, the control unit 130 may actively retrieve the image data, while in other examples, the image data may be received at the control unit 130 via the communications interface. The image data may include an image map defining portions of the composite image to be displayed at respective displays of the tiled display imaging system 100.

At block 510, the control unit 130 obtains audio data defining an audio response to be generated in the tiled display imaging system 100. For example, the control unit 130 may obtain the audio data from memory or from an external source. In some examples, the control unit 130 may actively retrieve the audio data, while in other examples, the audio data may be received at the control unit 130 via the communications interface. The audio data may include an audio map defining a plurality of audio tracks to be generated at a respective one of the plurality of tiles by the acoustic coupling device. In some examples, the audio data and the image data may be integrated such that the audio tracks correspond to the respective portions of the composite image to be displayed at the respective one of the plurality of tiles.

At block 515, the displays 122 display respective portions of the composite image according to the image data. Together, the portions generated at each display 122, in their geometrical configuration, form the composite image on the display wall.

At block 520, the acoustic coupling devices 124 induce resonance in the respective displays 122 to generate audio responses according to the audio data. In particular, each acoustic coupling device 124 vibrates the display 122 to which it is coupled, causing the audio response to be generated at the display 122. In some examples, the audio map may define a first audio track to be generated by the acoustic coupling device 124-1 at the display 122-1, a second audio track to be generated by the acoustic coupling device 124-2 at the display 122-2, and so on. Accordingly, at block 520, the acoustic coupling device 124-1 may vibrate the display 122-1 at a first vibration frequency to generate an audio response of a first output frequency according to the first audio track and the acoustic coupling device 124-2 may vibrate the display 122-2 at a second vibration frequency to generate an audio response of a second output frequency according to the second audio track. Each tile 120 may thus generate an audio response independent of each other, and the system 100 can thereby provide appropriate audio channel separation at the tiles 120 in the display wall.

In some implementations, at block 520, the audio response generated at the tile 120 may further be amplified by an amplifier coupled to the acoustic coupling device 124. For example, the amplifier may amplify the audio response based on the audio track received at the acoustic coupling device. In addition, the audio response generated at the tile 120 may be equalized by an equalizer coupled to the acoustic coupling device 124. Specifically, the raw audio output generated at the display 122 may be equalized to produce the intended frequency response specified in the audio data (e.g. the output frequency specified by the audio track received at the acoustic coupling device 124). In some examples, the audio response generated at the tile 120 by the acoustic coupling device 124 may be at a frequency between about 80 Hz to 20,000 Hz. In such examples, the method 500 may further include generating, by the bass unit 140, audio responses at frequencies between about 20 Hz to 200 Hz.

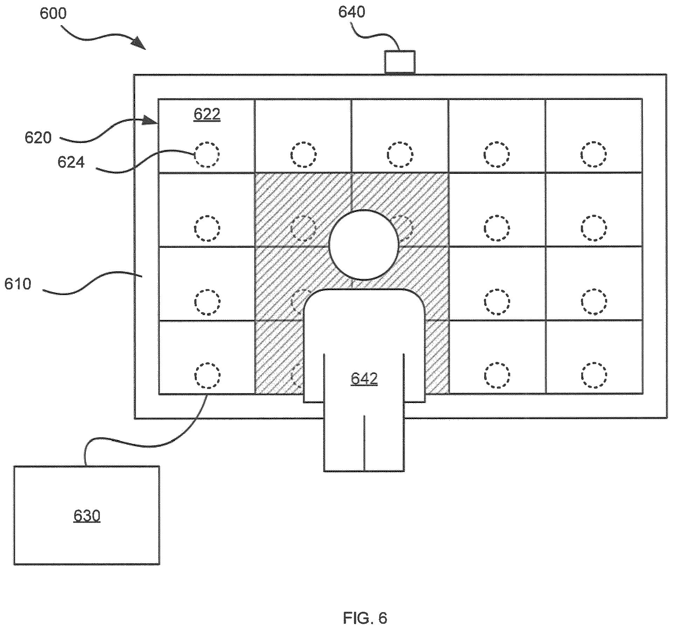

As will now be appreciated by a person of skill in the art, there are yet more alternative implementations and modifications possible. For example, referring to FIG. 6, an example system 600 is depicted. The system 600 is similar to the system 100 and includes a frame 610 configured to support tiles 620 in a geometrical configuration, such as a rectangular tiled arrangement, a curved surface, an irregular shape, or similar. The tiles 620 are supported on the frame 610 and form a display wall. In particular, the tiles 620 include displays 622 configured to display images. The displays 622 are configured to generate a respective portion of a composite image formed over the display wall within the system 600. For example, the displays 622 may be LED displays. The tiles 620 further include acoustic coupling devices 624. Specifically, each acoustic coupling device 624 is coupled to a respective display 622 to induce resonance in the respective display 622 to generate an audio response at the tile 620. In particular, the acoustic coupling device 624 may vibrate the display 622 at a vibration frequency to induce resonance in the display 122 corresponding to an audio response at an output frequency. The system 600 further includes a control unit 630 coupled to the tiles 620. The control unit 630 is similar to the control unit 130 and is generally configured to control the tiles 620 to display images and generate audio responses.

The system 600 further includes a motion sensor 640 configured to detect a person 642 in front of the display wall. The motion sensor 640 may be interconnected with the control unit 630. For example the motion sensor 640 can include image sensors, photodetectors, infrared sensors, microwave sensors, or other suitable sensors or combinations of sensors configured to detect motion. In particular, the motion sensor 640 may be calibrated to detect a position of the person 642 relative to the display wall and generate position data corresponding to said position. The motion sensor 640 may further be configured to communicate the position data to the control unit 630.

In operation, the control unit 630 may obtain image data and audio data defining images to be displayed and audio responses to be generated, respectively. The control unit 630 may control the tiles 620, and in particular, the displays 622 to display images according to the image data. The control unit 630 may control the tiles 620, and in particular, the acoustic coupling devices 624 to induce resonance in the displays 622 to generate an audio response according to the audio data and according to position data received from the motion sensor 640. For example, the control unit 630 may control the tiles 620 within a threshold distance (shown in shading) from the person 642 to generate an audio response. Accordingly, the system 600 may track the position of the person 642 and generate audio responses accordingly. In some examples, the tiles 620 within a first threshold distance of the person 642 may generate a first audio response, the tiles 620 within a second threshold distance of the person 642 may generate a second audio response, and so on. In further examples, the tiles 620 may generate audio responses in accordance with gesture data (e.g. as calibrated to specific gestures or motions) in addition to or instead of position data. Still further applications and expansions are also contemplated. The modularity of the system, and the ability of each tile to generate a specific and independent audio response thus allows position tracking, gesture tracking, and interactivity to be utilized in large display walls.

As will be appreciated by a person of skill in the art, there are yet more alternative implementations and modifications possible. Persons skilled in the art will appreciate that there are yet more alternative implementations and modifications possible, and that the above examples are only illustrations of one or more implementations. The scope, therefore, is only to be limited by the claims appended hereto.

## Claims

1. A tiled display imaging system comprising:
a frame;
a plurality of tiles supported on the frame in a geometrical configuration for displaying a composite image, each tile including:
a display configured to display a respective portion of the composite image according to image data; and
an acoustic coupling device coupled to the display, the acoustic coupling device configured to induce resonance in the display to generate an audio response at the tile according to audio data.

2. The tiled display imaging system of claim 1, wherein the audio data comprises an audio map defining a plurality of audio tracks to be generated at a respective one of the plurality of tiles by the acoustic coupling device.

3. The tiled display imaging system of claim 2, wherein:
at a first tile of the plurality of tiles, a first acoustic coupling device is configured to vibrate a first display at a first vibration frequency to generate a first audio response of a first output frequency according to a first audio track of the plurality of audio tracks; and
at a second tile of the plurality of tiles, a second acoustic coupling device is configured to vibrate a second display at a second vibration frequency to generate a second audio response of a second output frequency according to a second audio track of the plurality of audio tracks.

4. The tiled display imaging system of claim 2, wherein the audio data is integrated with the image data such that the audio tracks correspond to the respective portions of the composite image displayed at the respective one of the plurality of tiles.

5. The tiled display imaging system of claim 1, wherein each tile further comprises an amplifier coupled to the acoustic coupling device to amplify the audio response generated at the tile.

6. The tiled display imaging system of claim 1, wherein each tile further comprises an equalizer coupled to the acoustic coupling device to equalize the audio response generated at the tile.

7. The tiled display imaging system of claim 1, wherein the acoustic coupling devices are configured to generate audio responses at frequencies between 80 Hz to 20,000 Hz.

8. The tiled display imaging system of claim 7, further comprising a bass unit configured to generate audio responses at frequencies between 20 Hz to 200 Hz.

9. The tiled display imaging system of claim 1, wherein the displays comprise light emitting diode (LED) displays.

10. A method in a tiled display imaging system including a plurality of tiles arranged in a geometrical configuration, the method comprising:
obtaining image data defining a composite image to be displayed in the tiled display imaging system;
obtaining audio data defining sound to be generated in the tiled display imaging system; and
at each of the tiles:
displaying, by a display of the tile, a respective portion of the composite image according to the image data; and
generating, by an acoustic coupling device of the tile, the acoustic coupling device coupled to the display, an audio response via resonance induced in the display according to the audio data.

11. The method of claim 10 wherein the audio data comprises an audio map defining a plurality of audio track to be generated at a respective one of the plurality of tiles by the acoustic coupling device.

12. The method of claim 11, further comprising:
at a first tile of the plurality of tiles, vibrating a first display at a first vibration frequency to generate a first audio response of a first output frequency according to a first audio track of the plurality of audio tracks; and
at a second tile of the plurality of tiles, vibrating a second display at a second vibration frequency to generate a second audio response of a second output frequency according to a second audio track of the plurality of audio tracks.

13. The method of claim 11, wherein the audio data is integrated with the image data such that the audio tracks correspond to the respective portions of the composite image displayed at the respective one of the plurality of tiles.

14. The method of claim 10, further comprising at each of the tiles, amplifying, by an amplifier, the audio response generated at the tile.

15. The method of claim 10, further comprising, at each of the tiles, equalizing, by an equalizer, the audio response generated at the tile.

16. The method of claim 10, wherein generating the audio response comprises generating the audio response at frequencies between 80 Hz to 20,000 Hz.

17. The method of claim 16, further comprising generating, by a bass unit, audio responses at frequencies between 20 Hz to 200 Hz.
